# EUROPEAN PATENT APPLICATION

(11) **EP 1 903 779 A2**
(43) Date of publication of application: **26.03.2008**
(21) Application number: 07113081.9
(22) Date of filing: 25.07.2007
(51) Int. Cl.: H04N 5/04

(54) **Display apparatus and signal control method thereof**

(30) Priority: 25.09.2006 KR 20060092684
(71) Applicant: Samsung Electronics Co., Ltd., Suwon-si 442-742 Gyeonggi-do (KR)
(72) Inventor: Na, Jeong-shan, Gyeonggi-do (KR)
(74) Representative: Robinson, Ian Michael

(57) **Abstract**

A display apparatus includes a display unit (10) which displays a processed video, a signal process unit (20) which detects a synchronizing signal from an input video signal and performs a signal process according to the detected synchronizing signal; and a controller (30) which divides a duty ratio of the detected synchronizing signal into sections at a center of the duty ratio, determines a slice level as a synchronizing signal level where a difference between the respective duty ratios by section is within a certain range, and controls the signal process unit (20) to perform the signal process according to the determined slice level to display the processed video on the display unit (10).

## Description

### BACKGROUND OF INVENTION

### Field of Invention

Apparatuses and methods consistent with the present invention relate to display signal control, and more particularly, to a display signal control which determines a synchronizing signal level.

### Description of the Related Art

A display apparatus receives and processes a video signal, and outputs the processed video signal in a format capable of being displayed. The video signal that the display apparatus receives includes a luminance signal and a chrominance signal and a synchronizing signal.

However, if there is a noise in the synchronizing signal, the display apparatus may not properly recognize the synchronizing signal. Accordingly, a corresponding video horizontally or perpendicularly may tremble, or a color of the video may not be properly displayed.

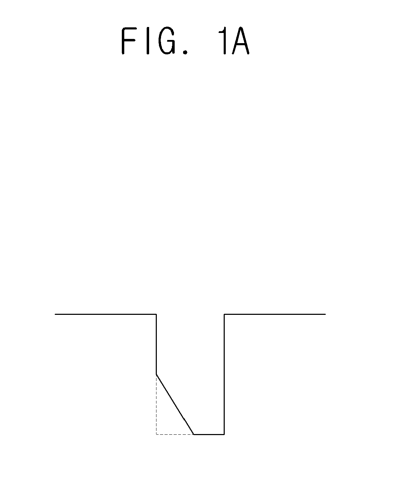

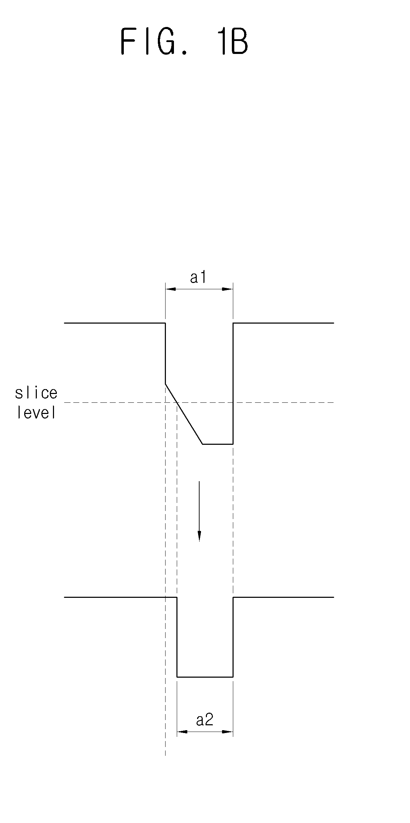

A video distortion according to an abnormal synchronizing signal will be hereinafter described with reference to FIGS. 1A and 1B.

A synchronizing signal includes a certain duty ratio. A normal synchronizing signal includes a uniform synchronizing signal level according to the duty ratio. If there is a noise in a video signal that the display apparatus receives, the synchronizing signal may be distorted, thereby will have a duty ratio including a non-uniform level as illustrated in FIG. 1A.

Thus, a slice level is set up for the synchronizing signal including a first duty ratio having a non-uniform level due to a noise, and a second duty ratio is set up according to the slice level again. Then, the display apparatus also recognizes the synchronizing signal with the second duty ratio again. The display apparatus displays a corresponding video on a display unit by the synchronizing signal having the second duty ratio. However, if the slice level is positioned at a distorted part of the first duty ratio as illustrated in FIG. 1B, even though the synchronizing signal originally includes a duty ratio of a1, the display apparatus recognizes that the synchronizing signal includes another ratio of a2. Accordingly, the display apparatus may not recognize the synchronizing signal having a normal duty ratio that an input video signal originally includes, and thus, the video distortion may not be prevented from occurring.

### SUMMARY OF THE INVENTION

According to the present invention there is provided an apparatus and method as set forth in the appended claims. Other features of the invention will be apparent from the dependent claims, and the description which follows.

The present invention provides a display apparatus and a signal control method thereof, which can properly display a video by determining a suitable slice level with a duty ratio of a synchronizing signal.

According to an aspect of the present invention, there is provided a display apparatus, comprising: a display unit which displays a processed video; a signal process unit which detects a synchronizing signal from an input video signal and performs a signal process according to the detected synchronizing signal; and a controller which divides a duty ratio of the detected synchronizing signal into sections at a center of the duty ratio, determines a slice level as a synchronizing signal level where a difference between the respective duty ratios by section is within a certain range, wherein the certain range may be predetermined, and controls the signal process unit to perform the signal process according to the determined slice level to display the processed video on the display unit

According to an aspect of the invention, the controller determines the slice level as the synchronizing signal level where the respective duty ratios by section have a same value.

According to an aspect of the invention, the display apparatus further comprises a slice level determining unit which receives the detected synchronizing signal and determines the slice level, wherein the certain slice level maybe predetermined. Moreover, the controller controls the slice level determining unit to determine the slice level as the synchronizing signal level where the respective duty ratios by section have the same value.

According to an aspect of the invention, the controller determines the slice level by successively increasing or decreasing the synchronizing signal level.

According to an aspect of the invention, if the respective duty ratios by section are uniform, the controller determines the slice level as a middle point of a maximum synchronizing signal level.

According to an aspect of the invention, the synchronizing signal comprises a horizontal synchronizing signal and a vertical synchronizing signal.

According to an aspect of the invention, the input video signal comprises one of signal standards of phase alternation by line, national television system committee, and sequentiel couleur a memoire.

According to another aspect of the present invention, there is provided a signal control method of a display apparatus, comprising: detecting a synchronizing signal from an input video signal; calculating a duty ratio by section based on a center of the detected synchronizing signal according to a synchronizing signal level; checking whether a difference between the respective duty ratios by section is within a certain range; determining a slice level as the synchronizing signal level wherein the difference between the respective duty ratios by section is within the certain range, if the difference between the respective duty ratios by section is within the certain range, as result of the checking; and displaying a processed video according to the determined slice level.

According to an aspect of the invention, the checking whether the difference between the respective duty ratios by section is within the certain range comprises checking whether the respective duty ratios by section have a same value.

According to an aspect of the invention, the determining the slice level comprises determining the slice level by successively increasing or decreasing the synchronizing signal level.

According to an aspect of the invention, the synchronizing signal comprises a horizontal synchronizing signal and a vertical synchronizing signal.

According to an aspect of the invention, the video signal comprises one of signal standards of phase alternation by line, national television system committee, and sequentiel couleur a memoire.

### BRIEF DESCRIPTION OF THE DRAWINGS

The above and other aspects of the present invention will become apparent and more readily appreciated from the following description of the exemplary embodiments with reference to the accompanying drawings, in which:
FIGS. 1A and 1B are diagrams illustrating a video distortion according to an abnormal synchronizing signal;
FIGS. 2A and 2B are block diagrams illustrating configurations of a display apparatus according to an exemplary embodiment of the present invention;
FIGS. 3A and 3B are diagrams illustrating an operation of calculating a slice level in a display apparatus according to an exemplary embodiment of the present invention; and
FIG. 4 is a flow chart illustrating a signal control method of a display apparatus according to an exemplary embodiment of the present invention.

### DETAILED DESCRIPTION OF EXEMPLARY EMBODIMENTS OF THE INVENTION

Hereinafter, the exemplary embodiments of the present invention will be described in detail with reference to the appended drawings.

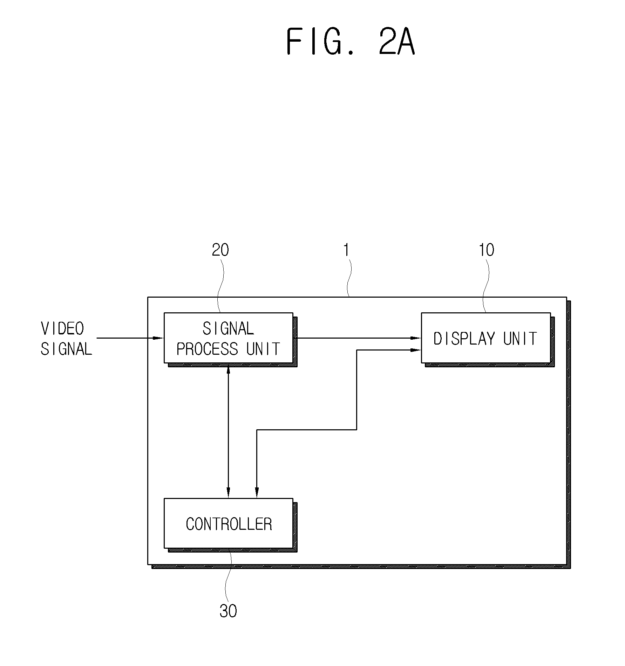

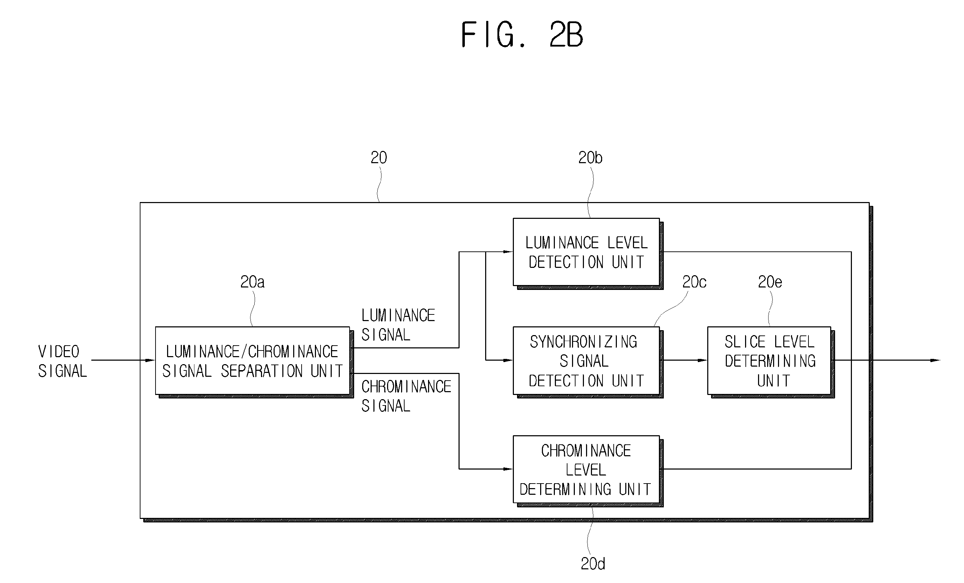

First, a display apparatus 1 according to an exemplary embodiment of the present invention will be described with reference to FIGS. 2A and 2B.

As illustrated in FIG. 2A, the display apparatus 1 includes a display unit 10, a signal process unit 20, and a controller 30. For example, the display apparatus 1 according to the exemplary embodiment of the present invention may be provided as a television.

The display unit 10 displays a video based on a video signal processed by the signal process unit 20, which will be described below. The display unit 10 may be provided as one of various types such as a cathode ray tube (CRT), a liquid crystal display (LCD), a plasma display panel (PDP), a digital light processing (DLP) device, a surface-condition electron-emitter display (SED) device, and a field emission display (FED) device.

The signal process unit 20 performs a process of an input video signal. As illustrated in FIG. 2B, the signal process unit 20 includes a luminance/chrominance signal separation unit 20a, a luminance level detection unit 20b, a synchronizing signal detection unit 20c, a chrominance level detection unit 20d, and a slice level determining unit 20e.

The luminance/chrominance signal separation unit 20a separates a luminance signal Y and two chrominance signals Cb and Cr from the input video signal. Since the luminance signal Y and the chrominance signals Cb and Cr are transmitted to the signal process unit 20a through frequency ranges different from each other, the luminance/chrominance signal separation unit 20a separates the luminance signal Y from the input video signal through a notch filter and separates the chrominance signals Cb and Cr through a low pass filter.

The luminance level detection unit 20b detects a level of the luminance signal Y separated from the luminance/chrominance signal separation unit 20a.

The synchronizing signal detection unit 20c detects a horizontal synchronizing signal and a vertical synchronizing signal from the luminance signal Y separated from the luminance/chrominance signal separation unit 20a. In the exemplary embodiment of the present invention, the synchronizing signal detection unit 20c may be provided as a comparator.

The chrominance level detection unit 20d detects each level of the chrominance signals Cb and Cr separated from the luminance/chrominance signal separation unit 20a. A matrix circuit (not shown) may convert the luminance signal Y and the chrominance signals Cb and Cr into a red, green and blue signal according to the respective levels detected by from the luminance level detection unit 20b and the chrominance level detection unit 20d.

The slice level determining unit 20e, according to control of the controller 30 (to be described below), determines a slice level where a duty ratio by section according to a certain synchronizing signal level has a same value based on a center of the synchronizing signal detected from the input video signal. An operation of the slice level determining unit 20e according to the exemplary embodiment of the present invention will be described together when an operation of the controller 30 is described below.

The controller 30 controls the slice level determining unit 20e to determine the slice level where the duty ratio by section according to the certain synchronizing signal level has the same value based on the center of the synchronizing signal detected from the input video signal, and controls the signal process unit 20 to perform a signal process according to the slice level determined by the slice level determining unit 20e to display a video on the display unit 10.

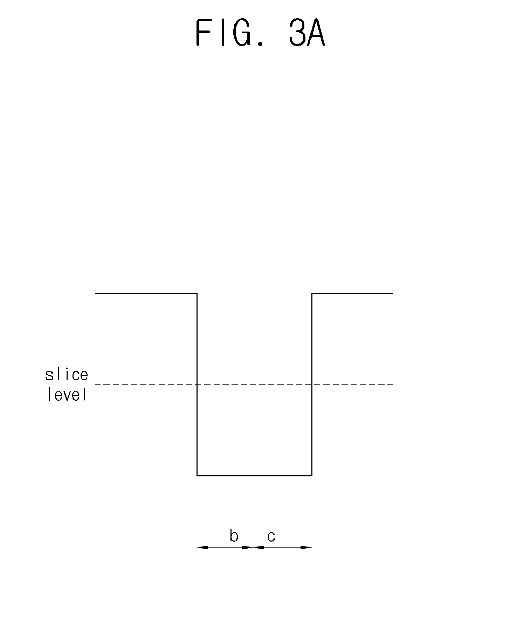

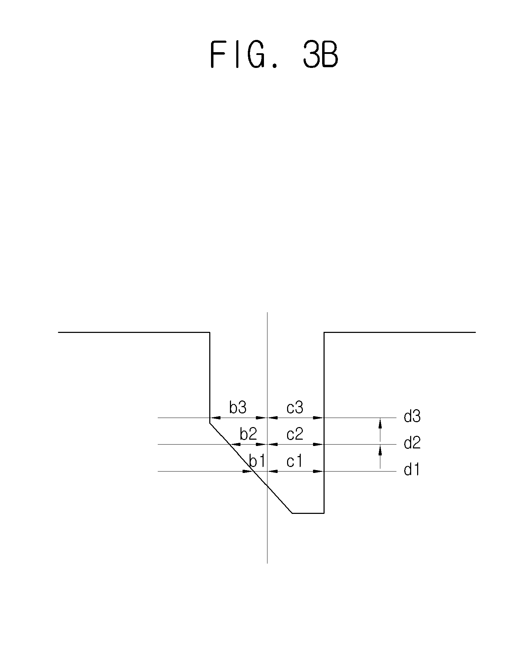

Hereinafter, an operation of calculating a slice level in the display apparatus 1 according to the exemplary embodiment of the prevent invention will be in detail described with reference to FIGS. 3A and 3B.

FIG. 3A illustrates an operation of the controller 30 that determines a slice level if a synchronizing signal detected from an input video signal is a normal signal having no noise.

As illustrated, if there is no noise in the synchronizing signal, a middle point of a maximum synchronizing signal may be set up as the slice level because the duty ratio by section according to the synchronizing level is uniform.

As illustrated in FIG. 3B, if there is a noise in the synchronizing signal, the controller 30 controls the signal process unit 20 to determine the slice level as a synchronizing signal level where a difference between the respective duty ratios by section is within a certain range. For example, if a preset slice level is d1 before determining the slice level, the respective duty ratios by section are b1 and c1. Since the calculated duty ratios b1 and c1 are different from each other, the slice level will be set up as d2 replacing d1 again. Then, the controller 30 calculates the respective duty ratios by section.

By repeating the above-described operation, if the slice level is set up as d3, the respective duty ratios by section are b3 and c3. Since the calculated duty ratios b3 and c3 are identical to each other, the difference between the respective duty ratios is within the certain range at the slice level d3. Accordingly, the controller 30 can prevent a video from being distorted and stably display the video on the display unit 10 by determining the slice level as d3, and setting up a reference of the synchronizing signal as the determined slice level d3.

In addition, if the preset slice level is a lower level, the controller 30 may determine the slice level as the synchronizing signal level d3 where the respective duty ratio by section are identical to each other by successively increasing the slice level.

That is, the controller 30 may more exactly determine the slice level by determining the slice level as the synchronizing signal level where the respective duty ratios by section have a same value.

The video signal includes one of signal standard, of phase alternation by line (PAL), national television system committee (NTSC), sequentiel couleur a memoire (SECAM), or the like. Here, the synchronizing signal includes duty ratios different from each other according to each inherent signal standard of the video signal. However, in the exemplary embodiment of the present invention, the controller 30 may determine the slice level regardless of the respective signal standard because the controller 30 separates the respective duty ratios by section are into sections based on the center of the duty ratio and determine the synchronizing level where the respective duty ratios by section have a same value.

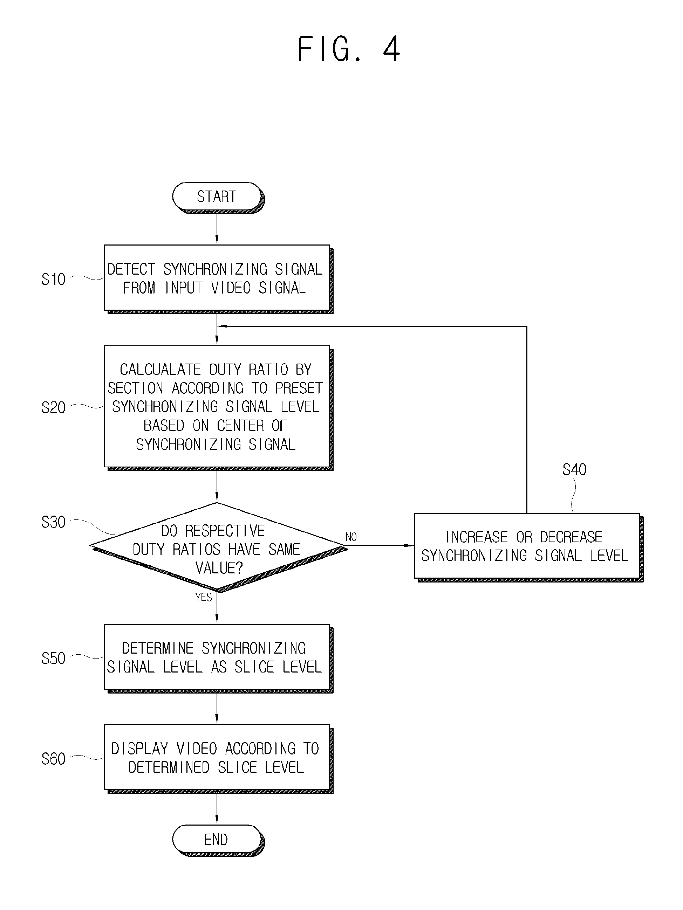

Hereinafter, a signal control method of the display apparatus 1 according to the exemplary embodiment of the present invention will be described with reference to FIG. 4.

First, the controller 30 detects a synchronizing signal from an input video signal (S10). The controller 30 calculates a duty ratio by section according to a certain synchronizing signal level based on a center of the synchronizing signal detected in operation S10 (S20). The controller 30 checks whether a difference between the respective duty ratios by section calculated in operation S20 is within a certain range at the synchronizing signal level (S30).

In operation S30, if the difference between the respective duty ratios by section is not within the certain range at the synchronizing signal level, the controller 30 increases or decreases the synchronizing signal level (S40). Then, the controller 30 returns to operation S20. If the difference between each section of the duty ratio is within the certain range at another synchronizing signal level, the controller 30 determines the synchronizing signal level as a slice level (S50).

The controller 30 may more exactly determine the slice level by determining the slice level as the synchronizing signal level where the respective duty ratios by section have a same value.

Then, the controller 30 displays a video according to the determined slice level (S60).

As apparent from the above description, there are provided a display apparatus and a signal control method thereof, which can improve a video quality by preventing a video from being distorted and suitably displaying the video even though an abnormal synchronizing signal is received.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus, comprising:
a display unit (10) which displays a processed video;
a signal process unit (20) which detects a synchronizing signal from an input video signal and performs a signal process according to the detected synchronizing signal; and
a controller (30) which divides a duty ratio of the detected synchronizing signal into sections at a center of the duty ratio, determines a slice level as a synchronizing signal level wherein a difference between the respective duty ratios by section is within a certain range, and controls the signal process unit (20) to perform the signal process according to the determined slice level to display the processed video on the display unit (10).

2. The display apparatus according to claim 1, wherein the controller (30) determines the slice level as the synchronizing signal level wherein the respective duty ratios by section have a same value.

3. The display apparatus according to claim 2, further comprising a slice level determining unit which receives the detected synchronizing signal and determines the slice level,
wherein the controller (30) controls the slice level determining unit to determine the slice level as the synchronizing signal level wherein the respective duty ratios by section have the same value.

4. The display apparatus according to claim 1, wherein the controller (30) determines the slice level by successively increasing or decreasing the synchronizing signal level.

5. The display apparatus according to claim 1, wherein if the respective duty ratios by section are uniform, the controller (30) determines the slice level as a middle point of a maximum synchronizing signal level.

6. The display apparatus according to claim 1, wherein the synchronizing signal comprises a horizontal synchronizing signal and a vertical synchronizing signal.

7. The display apparatus according to claim 1, wherein the input video signal comprises one of signal standards of phase alternation by line, national television system committee, and sequentiel couleur a memoire.

8. A signal control method of a display apparatus, comprising:
detecting a synchronizing signal from an input video signal;
calculating a duty ratio by section based on a center of the detected synchronizing signal according to a synchronizing signal level;
checking whether a difference between the respective duty ratios by section is within a certain range;
determining a slice level as the synchronizing signal level wherein the difference between the respective duty ratios by section is within the certain range, if the difference between the respective duty ratios by section is within the certain range, as result of the checking; and
displaying a processed video according to the determined slice level.

9. The signal control method according to claim 8, wherein the checking whether the difference between the respective duty ratios by section is within the certain range comprises checking whether the respective duty ratios by section have a same value.

10. The signal control method according to claim 8, wherein the determining the slice level comprises determining the slice level by successively increasing or decreasing the synchronizing signal level.

11. The signal control method according to claim 8, wherein the synchronizing signal comprises a horizontal synchronizing signal and a vertical synchronizing signal.

12. The signal control method according to claim 8, wherein the input video signal comprises one of signal standards of phase alternation by line, national television system committee, and sequentiel couleur a memoire.
